# EUROPEAN PATENT APPLICATION

(11) **EP 4 681 972 A1**
(43) Date of publication of application: **21.01.2026**
(21) Application number: 23929362.4
(22) Date of filing: 31.03.2023
(51) Int. Cl.: B60L 15/20, B60W 30/18

(54) **VEHICLE CONTROL METHOD, APPARATUS, VEHICLE AND STORAGE MEDIUM**

(71) Applicant: Shenzhen Yinwang Intelligent Technologies Co., Ltd., Shenzhen, Guangdong 518110 (CN)
(72) Inventor: LI, Jinhang, Shenzhen, Guangdong 518129 (CN); CHAI, Benben, Shenzhen, Guangdong 518129 (CN); LIU, Fengyu, Shenzhen, Guangdong 518129 (CN)
(74) Representative: Maiwald GmbH
(86) International application number: PCT/CN2023/085341
(87) International publication number: WO 2024/197769

(57) **Abstract**

A vehicle control method and apparatus, a vehicle, and a storage medium are disclosed, and relate to the field of automotive technologies. The method includes: obtaining wheel speeds of two wheels on a first drive shaft of a vehicle, where the first drive shaft is any drive shaft of the vehicle, and output torque of a first motor corresponding to the first drive shaft is first torque; and when a first difference between the two wheels on the first drive shaft is greater than a first safety threshold, controlling, based on slip rates of the two wheels on the first drive shaft, the output torque of the first motor to change from the first torque to second torque, so that the first difference between the two wheels on the first drive shaft is not greater than a second safety threshold, where the first difference is a wheel speed difference or a slip rate difference, the first safety threshold is a safety threshold corresponding to a case in which the output torque of the first motor is the first torque, and the second safety threshold is a safety threshold corresponding to a case in which the output torque of the first motor is the second torque.

## Description

### TECHNICAL FIELD

This application relates to the field of automotive technologies, and in particular, to a vehicle control method and apparatus, a vehicle, and a storage medium.

### BACKGROUND

A differential in a vehicle is a mechanism that outputs different torque to a left drive half shaft and a right drive half shaft in a drive shaft, thereby allowing two wheels on the same drive shaft to rotate at different wheel speeds. The differential can meet a requirement of different wheel speeds for the two wheels on the same drive shaft when the vehicle turns. In a single-side wheel slip scenario like high-speed cornering or off-road recovery, a first difference between the two wheels on the same drive shaft is likely to be excessively large, causing damage to the differential.

To cope with this case, a limited slip differential (limited slip differential, LSD) is provided in a related technology. The LSD includes an electronic control actuator and a clutch. When controlling the vehicle, the electronic control actuator controls a status of the clutch, and controls, based on the status of the clutch, a degree of jointing between the left drive half shaft and the right drive half shaft in the drive shaft that are connected to the clutch, to limit the first difference between the two wheels on the same drive shaft.

Because the LSD requires the electronic control actuator for control and suffers from significant wear and tear on its clutches during operation, leading to a short service life. Consequently, using the LSD for differential speed control incurs higher costs.

### SUMMARY

This application provides a vehicle control method and apparatus, a vehicle, and a storage medium, to resolve a problem of an excessively large first difference using a common differential in a vehicle, thereby reducing costs.

According to a first aspect, this application provides a vehicle control method. The method includes: obtaining wheel speeds of two wheels on a first drive shaft of a vehicle, where output torque of a first motor corresponding to the first drive shaft is first torque; and when a first difference between the two wheels on the first drive shaft of the vehicle is greater than a first safety threshold, controlling, based on slip rates of the two wheels on the first drive shaft, the output torque of the first motor to change from the first torque to second torque, so that the first difference between the two wheels on the first drive shaft is not greater than a second safety threshold.

The first drive shaft may be any drive shaft of the vehicle. For example, the first drive shaft may be a front drive shaft of the vehicle. The method is applied to the front drive shaft, so that a first difference between two wheels on the front drive shaft is controlled within a safety threshold. For another example, the first drive shaft may be a rear drive shaft of the vehicle. The method is applied to the rear drive shaft, so that a first difference between two wheels on the rear drive shaft is controlled within a safety threshold. For another example, the first drive shaft may be a front drive shaft of the vehicle, and may also be a rear drive shaft of the vehicle. The method is applied to both the front drive shaft and the rear drive shaft, so that a first difference between two wheels on the rear drive shaft is controlled within a safety threshold.

For example, a drive shaft and a motor to which the method is applied may be determined based on a configuration of the motor and a clutch. For example, the method is applied to a drive shaft and a motor that are configured with an open differential.

The first difference is a wheel speed difference or a slip rate difference. The wheel speed difference between the two wheels on the first drive shaft of the vehicle may be directly obtained by performing subtraction on the wheel speeds of the two wheels and taking an absolute value of a subtraction result. The slip rate difference between the two wheels on the first drive shaft of the vehicle may be obtained by performing subtraction on the slip rates of the two wheels and taking an absolute value of a subtraction result. Generally, a larger slip rate difference indicates a larger wheel speed difference.

The safety threshold varies with the output torque of the first motor corresponding to the first drive shaft. The first safety threshold is a safety threshold corresponding to a case in which the output torque of the first motor is the first torque. The second safety threshold is a safety threshold corresponding to a case in which the output torque of the first motor is the second torque.

The vehicle is generally in a scenario like high-speed cornering (drifting) or off-road recovery when the first difference between the two wheels on the first drive shaft is excessively large. In this case, the first difference and the safety threshold may be changed by adjusting magnitude of the output torque of the first motor, so that the first difference between the two wheels on the first drive shaft is not greater than the safety threshold. According to the foregoing vehicle control solution, a problem of an excessively large differential speed can be resolved using only a common differential in the vehicle. In addition, in this solution, a service life of the differential can be prolonged, and costs can be controlled.

Optionally, the method may further include: determining the first safety threshold. The safety threshold herein is a wheel speed difference (or slip rate) range within which safe work of the differential can be ensured under the output torque of the first motor.

Motor output torque is negatively correlated with a threshold. Therefore, determining the first safety threshold includes:
obtaining a correspondence between motor output torque and a threshold; and obtaining, from the correspondence between motor output torque and a threshold, the first safety threshold corresponding to the case in which the output torque of the first motor is the first torque.

In this manner, a current safety threshold corresponding to the first torque of the vehicle can be obtained in real time, to provide a basis for controlling the motor output torque, avoid that the first difference exceeds the safety threshold, and ensure safety.

The motor output torque and the threshold may be obtained through a bench durability test of the vehicle. For example, under a piece of output torque, the wheel speed difference or the slip rate difference between the two wheels is controlled to change in ascending order. Critical value for both intact and damaged differentials are determined. The critical value is used as a threshold corresponding to the output torque. Alternatively, under a wheel speed difference or a slip rate difference, the output torque is controlled to change in ascending order. Critical value for both intact and damaged differentials are determined. The critical value is used as the output torque, and the wheel speed difference or the slip rate difference is used as a corresponding threshold. In this manner, a threshold corresponding to each piece of output torque is determined, to form a correspondence.

Controlling the wheel speed difference or the slip rate difference between the two wheels to change in ascending order may be implemented by applying different braking forces to the two wheels or by adding different loads to the two wheels.

Correspondingly, a method for determining the second safety threshold is the same as a method for determining the first safety threshold. To be specific, the second safety threshold corresponding to the output torque of the first motor after dynamic control is obtained from the correspondence between motor output torque and a threshold.

For the vehicle, a current scenario of the vehicle may be identified using the slip rates of the two wheels on the first drive shaft.

In an implementation of this application, the current scenario of the vehicle may be identified based on a relationship between a slip rate of a wheel with a lower wheel speed in the two wheels on the first drive shaft and a slip rate range. Then, the output torque of the first motor may be controlled based on the current scenario of the vehicle.

The slip rate range may be obtained through a tire characteristic test. A tire traction force and a slip rate are in a quadratic function relationship. Within the slip rate range, the wheel has an optimal traction force. The slip rate range may be 10% to 25%.

For example, the slip rate of the wheel with the lower wheel speed in the two wheels on the first drive shaft is less than a lower limit of the slip rate range. One wheel on the first drive shaft does not slip at all, and it is determined that the vehicle is in a recovery scenario in which a wheel on one side maintains good traction, for example, an off-road recovery scenario.

For another example, the slip rate of the wheel with the lower wheel speed in the two wheels on the first drive shaft is greater than an upper limit of the slip rate range. Both the two wheels on the first drive shaft slip. It is determined that the vehicle is in the drifting scenario in which wheels on two sides have no grip, for example, the high-speed cornering (drifting) scenario.

When the vehicle is in different scenarios, the motor output torque is controlled differently, so that the first difference between the two wheels on the first drive shaft is not greater than the second safety threshold.

For example, the second torque is greater than the first torque.

Controlling, based on the slip rates of the two wheels on the first drive shaft, the output torque of the first motor to change from the first torque to the second torque, so that the first difference between the two wheels on the first drive shaft is not greater than the second safety threshold includes:
when the slip rate of the wheel with the lower wheel speed in the two wheels on the first drive shaft is less than the lower limit of the slip rate range, braking a wheel with a higher wheel speed or slip rate in the two wheels on the first drive shaft, and controlling the output torque of the first motor to increase from the first torque to the second torque, so that the first difference between the two wheels on the first drive shaft is not greater than the second safety threshold.

When the vehicle is in the recovery scenario, the output torque of the first motor needs to be increased, so that the vehicle obtains greater kinetic energy for recovery. However, the motor output torque is in a negative correlation with the safety threshold, increasing the output torque of the first motor decreases the safety threshold, and increasing the output torque also increases the first difference. Consequently, it cannot be ensured, when a kinetic energy requirement is met by increasing only the output torque, that the first difference between the two wheels is not greater than the second safety threshold. In view of this, in this implementation of this application, the wheel with the higher wheel speed or slip rate in the two wheels is first braked, to decrease the first difference, and then the output torque is increased on this basis, to ensure that the first difference between the two wheels on the first drive shaft is not greater than the second safety threshold when the output torque is increased.

In this scenario, through a combination of braking and increasing the output torque, the kinetic energy requirement in the scenario of the vehicle can be met, and safety of the differential can also be ensured when it is ensured that the wheel speed difference is below the safety threshold.

Braking the wheel with the higher wheel speed or slip rate in the two wheels on the first drive shaft, and controlling the output torque of the first motor to increase from the first torque to the second torque, so that the first difference between the two wheels on the first drive shaft is not greater than the second safety threshold may include:
determining a target difference obtained after braking, where the target difference obtained after braking is less than the first safety threshold, for example, less than the first safety threshold by more than a specific value, for example, less than the first safety threshold by more than 20%; providing a braking force based on the target difference, to brake the wheel with the higher wheel speed or slip rate in the two wheels; and after the first difference between the two wheels reaches the target difference through braking, controlling the output torque of the first motor to increase from the first torque to the second torque, so that the first difference between the two wheels on the first drive shaft is not greater than the second safety threshold.

In a manner, controlling the first motor to increase the output torque may be in a step-by-step manner until the first difference between the two wheels on the first drive shaft is equal to the second safety threshold, or until the first difference between the two wheels on the first drive shaft is less than the second safety threshold, and a difference between the two wheels is small, for example, is 1% to 5%.

In another manner, controlling the first motor to increase the output torque may be first determining the second torque corresponding to the first difference between the two wheels, where the safety threshold corresponding to the second torque is greater than the first difference between the two wheels. Because the first difference between the two wheels increases as the torque increases, a margin may be reserved when the second torque is determined. For example, maximum safety output torque is determined based on a first difference obtained after braking. Then, a specific amount or percentage (for example, 10%) is decreased on this basis, and a result is used as the second torque, to ensure that the first difference still does not exceed the safety threshold after the output torque is increased.

For example, the second torque is less than the first torque.

Controlling, based on the slip rates of the two wheels on the first drive shaft, the output torque of the first motor to change from the first torque to the second torque, so that the first difference between the two wheels on the first drive shaft is not greater than the second safety threshold includes:
in a first manner, when the slip rate of the wheel with the lower wheel speed in the two wheels on the first drive shaft is greater than the upper limit of the slip rate range, controlling the output torque of the first motor to decrease from the first torque to the second torque, so that the first difference between the two wheels on the first drive shaft is not greater than the second safety threshold; or
in a second manner, when the slip rate of the wheel with the lower wheel speed in the two wheels on the first drive shaft is greater than the upper limit of the slip rate range, braking a wheel with a higher wheel speed or slip rate in the two wheels on the first drive shaft, and controlling the output torque of the first motor to decrease from the first torque to the second torque, so that the first difference between the two wheels on the first drive shaft is not greater than the second safety threshold.

When the vehicle is in high-speed cornering (drifting), because the motor output torque is in the negative correlation with the safety threshold, decreasing the output torque of the first motor increases the safety threshold, and decreasing the output torque further decreases the first difference. Therefore, the output torque of the first motor is decreased, so that the first difference between the two wheels on the first drive shaft may be not greater than the second safety threshold. In addition to separately decreasing the output torque, so that the first difference between the two wheels on the first drive shaft is not greater than the second safety threshold, decreasing the output torque may be further combined with braking, so that the first difference between the two wheels on the first drive shaft is not greater than the second safety threshold.

In this scenario, drifting of the vehicle can be reduced by controlling the motor output torque to decrease, and it can be also ensured, by decreasing the output torque or through the combination of decreasing the output torque and braking, that the wheel speed difference is below the safety threshold, to ensure safety of the differential.

In the first manner, a manner of decreasing the motor output torque may be a step-by-step manner. The manner of decreasing the motor output torque may alternatively be first determining the second torque corresponding to the first difference between the two wheels, and controlling the motor using the second torque, where the second torque is safety output torque. The safety threshold corresponding to the second torque may be greater than or equal to the first difference between the two wheels, to ensure that the first difference is less than the safety threshold. The safety threshold corresponding to the second torque may also be less than the first difference between the two wheels. Because the first difference between the two wheels decreases as the torque decreases, the safety threshold is slightly (for example, 5%) less than the first difference between the two wheels, to also ensure that the first difference is less than the safety threshold.

In the second manner, the target difference obtained after braking may be first determined; the braking force is provided based on the first difference, to brake the wheel with the higher wheel speed or slip rate in the two wheels; and after the first difference between the two wheels reaches the target difference through braking, the output torque of the first motor is controlled to decrease from the first torque to the second torque, so that the first difference between the two wheels on the first drive shaft is not greater than the second safety threshold.

In a manner, the target difference obtained after braking is less than the first safety threshold, and the output torque is continuously decreased subsequently, so that it can be definitely ensured that the first difference between the two wheels is not greater than the second safety threshold. In another manner, alternatively, the target difference obtained after braking may not be less than the first safety threshold, or even not less than the subsequent second safety threshold, and the output torque is continuously decreased subsequently. The two manners are combined, so that the first difference between the two wheels is not greater than the second safety threshold.

In an implementation of this application, the output torque of the first motor may be controlled using a control instruction.

For example, controlling the output torque of the first motor to change from the first torque to the second torque, so that the first difference between the two wheels on the first drive shaft is not greater than the second safety threshold includes:
determining the second torque based on the first difference between the two wheels on the first drive shaft; outputting the control instruction based on the second torque; and controlling the output torque of the first motor using the control instruction, so that the first difference between the two wheels on the first drive shaft is not greater than the second safety threshold.

Herein, the first difference used to determine the second torque is, if braking is not performed, a first difference between the two wheels that are not braked, and if braking is performed, a first difference between the two wheels that are braked.

When the output torque is increased, the maximum safety output torque is determined based on a first difference obtained after braking, then the specific amount or percentage (for example, 10%) is decreased on this basis, and the result is used as the second torque.

When the output torque is decreased, the safety threshold corresponding to the second torque may be greater than or equal to the first difference between the two wheels. The safety threshold corresponding to the second torque may also be less than the first difference between the two wheels. For example, the safety threshold is slightly (for example, 5%) less than the first difference between the two wheels.

For a front-wheel-drive vehicle or a rear-wheel-drive vehicle, only a motor corresponding to a first drive shaft is controlled.

For a four-wheel-drive vehicle, when a first drive shaft is controlled, a second drive shaft may be further controlled. For example, details are as follows.

When the slip rate of the wheel with the lower wheel speed in the two wheels on the first drive shaft is greater than the upper limit of the slip rate range, and a slip rate of a wheel with a lower wheel speed in two wheels on a second drive shaft of the vehicle is not greater than the upper limit of the slip rate range, output torque of a second motor corresponding to the second drive shaft of the vehicle is controlled to increase from third torque to fourth torque, and a first difference between the two wheels on the second drive shaft is made not greater than a third safety threshold, where the third safety threshold is a safety threshold corresponding to a case in which the output torque of the second motor is the fourth torque.

For the four-wheel-drive vehicle, when a slip rate of a wheel with a lower wheel speed on another drive shaft does not exceed the upper limit, torque transfer may be performed, to ensure an overall driving force of the vehicle.

The output torque of the second motor may be controlled in a step-by-step manner or may be controlled after safety output torque corresponding to the first difference between the two wheels on the second drive shaft is determined. For a detailed process, refer to the foregoing control on the first motor.

When a slip rate of a wheel with a lower wheel speed in two wheels on a second drive shaft of the vehicle is greater than an upper limit of the slip rate range, output torque decrease control is performed on a second motor corresponding to the second drive shaft. For a detailed process, refer to the foregoing control on the first motor.

In an implementation of this application, the slip rate is a proportion of a slip component in wheel motion, and the slip rate is a ratio of a difference between a vehicle speed and the wheel speed to the vehicle speed. The vehicle speed and the wheel speed may be an average vehicle speed and an average wheel speed, for example, an average vehicle speed and an average wheel speed in a period of time.

In some possible implementations of this application, the slip rates of the two wheels on the first drive shaft are obtained based on the wheel speeds of the two wheels and a rotational speed of the first motor.

The wheel speed of the wheel is generally collected by a wheel speed sensor and then reported by a braking control unit. When the wheel speed sensor is faulty, the wheel speed of the wheel is inaccurate, and the slip rate cannot be calculated correctly. In view of this, determining the slip rates of the two wheels on the first drive shaft includes:
obtaining the rotational speed of the first motor; determining, based on the rotational speed of the first motor and the wheel speeds of the two wheels on the first drive shaft, whether the wheel speeds are accurate; and when the wheel speeds of the two wheels on the first drive shaft are accurate, determining the slip rates of the two wheels on the first drive shaft based on the wheel speeds of the two wheels on the first drive shaft and the rotational speed of the first motor; and when the wheel speeds of the two wheels on the first drive shaft are inaccurate, outputting a fault prompt, to prompt that the wheel speed sensor needs to be repaired or replaced.

In this implementation, when it is determined that the wheel speed is accurate, the slip rate of the wheel is calculated, to ensure accuracy of the slip rate obtained through calculation.

It may be determined, based on the wheel speeds of the two wheels on the first drive shaft and the rotational speed of the first motor, that the wheel speeds of the two wheels on the first drive shaft are accurate. For example, the rotational speed of the motor is compared with an average value of the wheel speeds of the two wheels. If a difference is greater than a specified difference, it is considered that the wheel speeds are inaccurate. If the difference is not greater than the specified difference, it is considered that the wheel speeds are accurate.

When the slip rates are calculated based on the wheel speeds of the two wheels and the rotational speed of the first motor, the vehicle speed may be first calculated based on the rotational speed of the first motor, and then the slip rates of the two wheels are calculated based on the vehicle speed and the wheel speeds of the two wheels.

In another possible implementation, alternatively, the vehicle speed of the vehicle may be additionally obtained. The slip rates of the two wheels are calculated based on the vehicle speed and the wheel speeds of the two wheels.

In another possible implementation, alternatively, an acceleration of the vehicle may be additionally obtained. The vehicle speed is determined by performing integration on the acceleration of the vehicle. The slip rates of the two wheels are calculated based on the vehicle speed and the wheel speeds of the two wheels.

In some possible implementations of this application, the method is performed by a vehicle control unit. For example, the vehicle control unit controls the output torque of the first motor, or controls a single wheel for braking and the output torque of the first motor.

When the vehicle control unit performs the method, obtaining the wheel speeds of the two wheels on the first drive shaft includes: obtaining the wheel speeds of the two wheels on the first drive shaft output by the braking control unit of the vehicle. Obtaining the rotational speed of the first motor includes: obtaining the rotational speed of the first motor output by a motor controller of the vehicle.

In some possible implementations of this application, the method is performed by a motor controller. For example, the vehicle control unit controls the output torque of the first motor, or controls a single wheel for braking and the output torque of the first motor.

When the motor controller performs the method, obtaining the wheel speeds of the two wheels on the first drive shaft includes: obtaining the wheel speeds of the two wheels on the first drive shaft output by the braking control unit of the vehicle. Obtaining the rotational speed of the first motor includes: obtaining the rotational speed detected by a sensor in the first motor.

In this implementation, the method may be executed by the vehicle control unit or the motor controller. Any controller is used for control based on an actual condition, to implement a differential protection solution, so as to facilitate integrated control and arrangement during actual application.

According to a second aspect, this application provides a vehicle control apparatus. The apparatus includes:
an obtaining unit, configured to obtain wheel speeds of two wheels on a first drive shaft of a vehicle, where the first drive shaft is any drive shaft of the vehicle, and output torque of a first motor corresponding to the first drive shaft is first torque; and
a control unit, configured to: when a first difference between the two wheels on the first drive shaft is greater than a first safety threshold, control, based on slip rates of the two wheels on the first drive shaft, the output torque of the first motor to change from the first torque to second torque, so that the first difference between the two wheels on the first drive shaft is not greater than a second safety threshold, where the first difference is a wheel speed difference or a slip rate difference, the first safety threshold is a safety threshold corresponding to a case in which the output torque of the first motor is the first torque, and the second safety threshold is a safety threshold corresponding to a case in which the output torque of the first motor is the second torque.

Optionally, the second torque is greater than the first torque.

The control unit is configured to: when a slip rate of a wheel with a lower wheel speed in the two wheels on the first drive shaft is less than a lower limit of a slip rate range, brake a wheel with a higher wheel speed or slip rate in the two wheels on the first drive shaft; and control the output torque of the first motor to increase from the first torque to the second torque, so that the first difference between the two wheels on the first drive shaft is not greater than the second safety threshold.

Optionally, the second torque is less than the first torque.

The control unit is configured to: when a slip rate of a wheel with a lower wheel speed in the two wheels on the first drive shaft is greater than an upper limit of a slip rate range, control the output torque of the first motor to decrease from the first torque to the second torque, so that the first difference between the two wheels on the first drive shaft is not greater than the second safety threshold.

Optionally, the second torque is less than the first torque.

The control unit is configured to: when a slip rate of a wheel with a lower wheel speed in the two wheels on the first drive shaft is greater than an upper limit of a slip rate range, brake a wheel with a higher wheel speed or slip rate in the two wheels on the first drive shaft; and control the output torque of the first motor to decrease from the first torque to the second torque, so that the first difference between the two wheels on the first drive shaft is not greater than the second safety threshold.

Optionally, the control unit is configured to: determine the second torque based on the first difference between the two wheels on the first drive shaft; output a control instruction based on the second torque; and control the output torque of the first motor using the control instruction, so that the first difference between the two wheels on the first drive shaft is not greater than the second safety threshold.

Optionally, the control unit is further configured to: when the slip rate of the wheel with the lower wheel speed in the two wheels on the first drive shaft is greater than the upper limit of the slip rate range, and a slip rate of a wheel with a lower wheel speed in two wheels on a second drive shaft of the vehicle is not greater than the upper limit of the slip rate range, control output torque of a second motor corresponding to the second drive shaft of the vehicle to increase from third torque to fourth torque, and make a first difference between the two wheels on the second drive shaft not greater than a third safety threshold, where the third safety threshold is a safety threshold corresponding to a case in which the output torque of the second motor is the fourth torque.

Optionally, the obtaining unit is further configured to obtain a rotational speed of the first motor.

The apparatus further includes a determining unit, configured to: determine, based on the rotational speed of the first motor and the wheel speeds of the two wheels on the first drive shaft, whether the wheel speeds are accurate; and when the wheel speeds of the two wheels on the first drive shaft are accurate, determine the slip rates of the two wheels on the first drive shaft based on the wheel speeds of the two wheels on the first drive shaft and the rotational speed of the first motor.

Optionally, the apparatus includes a vehicle control unit, or the apparatus includes a motor controller.

Optionally, the obtaining unit is further configured to: obtain a correspondence between motor output torque and a threshold, where the motor output torque is negatively correlated with the threshold; and obtain, from the correspondence between motor output torque and a threshold, the first safety threshold corresponding to the case in which the output torque of the first motor is the first torque.

According to a third aspect, this application provides a vehicle. The vehicle includes the vehicle control apparatus according to the second aspect and a motor. The vehicle control apparatus is connected to the motor.

According to a fourth aspect, this application provides a vehicle control device. The vehicle control device includes a processor and a memory. The memory is configured to store a software program and a module. The processor runs or executes the software program and/or the module stored in the memory, to enable the vehicle control device to implement the method according to any one of the possible implementations of the first aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated into a same chip, or may be respectively disposed on different chips. A type of the memory and a manner in which the memory and the processor are disposed are not limited in embodiments of this application.

According to a fifth aspect, this application provides a computer program (product). The computer program (product) includes computer program code. When the computer program code is run by a computer, the computer is enabled to perform the method according to any one of the possible implementations of the first aspect.

According to a sixth aspect, this application provides a computer-readable storage medium. The computer-readable storage medium is configured to store program code to be executed by a processor. The program code is used to implement the method according to any one of the possible implementations of the first aspect.

According to a seventh aspect, a chip is provided, including a processor. The processor is configured to: invoke instructions from a memory and run the instructions stored in the memory, to enable a communication device on which the chip is installed to perform the method according to any one of the possible implementations of the first aspect.

According to an eighth aspect, another chip is provided, including an input interface, an output interface, a processor, and a memory. The input interface, the output interface, the processor, and the memory are connected to each other through an internal connection path. The processor is configured to execute code in the memory. When the code is executed, the processor is configured to perform the method according to any one of the possible implementations of the first aspect.

### BRIEF DESCRIPTION OF DRAWINGS

FIG. 1 is a diagram of an architecture of a vehicle according to an embodiment of this application;
FIG. 2 is a flowchart of a vehicle control method according to an embodiment of this application;
FIG. 3 is a procedure of a vehicle control method according to an embodiment of this application;
FIG. 4 is a diagram of a relationship between a threshold and output torque according to an embodiment of this application;
FIG. 5 is a flowchart of a vehicle control method according to an embodiment of this application;
FIG. 6 is a block diagram of a vehicle control apparatus according to an embodiment of this application; and
FIG. 7 is a diagram of a structure of a vehicle control device according to an embodiment of this application.

### DESCRIPTION OF EMBODIMENTS

To make objectives, technical solutions, and advantages of this application clearer, the following further describes implementations of this application in detail with reference to accompanying drawings.

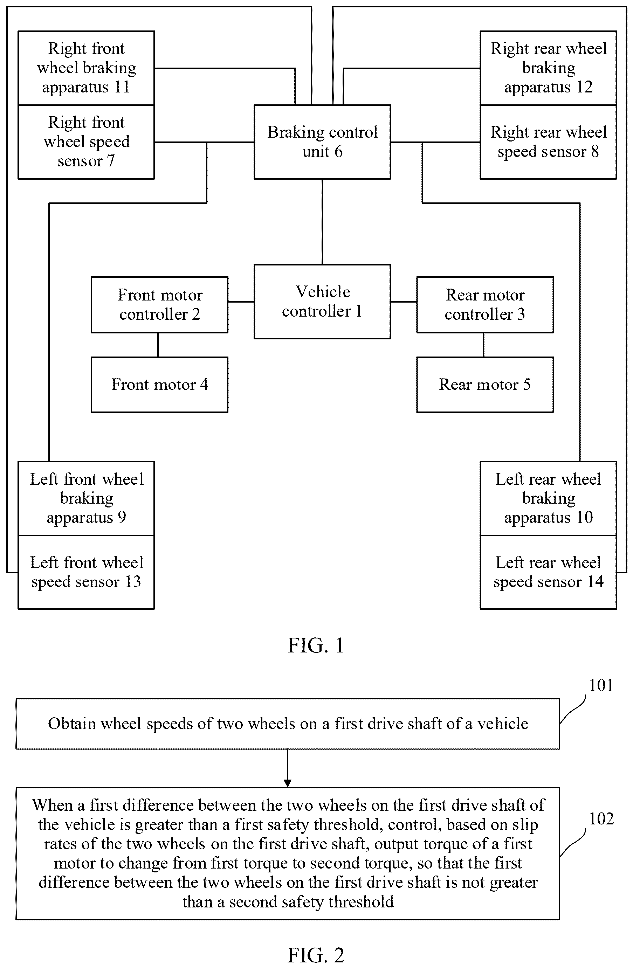

A system architecture in this application is first described, to facilitate understanding of the technical solutions provided in embodiments of this application. The system architecture in this application is a vehicle. FIG. 1 is a diagram of an architecture of a vehicle according to an embodiment of this application. With reference to FIG. 1, the vehicle includes a motor control loop and a braking control loop.

The motor control loop mainly includes a vehicle control unit (vehicle control unit, VCU) 1, a front motor controller 2, a rear motor controller 3, a front motor 4, and a rear motor 5. The vehicle control unit 1 is a main control unit of the vehicle, receives motor rotational speed and torque signals of a motor controller, and controls a torque increase/decrease requirement of the motor controller. The front motor controller 2 and the rear motor controller 3 respectively control torque increase/decrease of the front motor 4 and the rear motor 5 based on a torque request/instruction of the vehicle control unit 1, detect actual rotational speeds and torque signals of the front and rear motors, and feed back the actual rotational speeds and the torque signals to the vehicle control unit 1.

The braking control loop includes the vehicle control unit 1, a braking control unit 7, a right front wheel speed sensor 7, a right rear wheel speed sensor 8, a left front wheel speed sensor 9, a left rear wheel speed sensor 10, a right front wheel braking apparatus 11, a right rear wheel braking apparatus 12, a left front wheel braking apparatus 13, a left rear wheel braking apparatus 14, and the like. The vehicle control unit 1 receives a wheel speed signal and a braking pressure signal of the braking control unit, and controls pressure establishment of the braking loop. The braking control unit 6 mainly performs pressure establishment, pressure preservation, and pressure reduction control of the braking loop, to precisely control wheel side braking pressure, so as to implement a differential speed control function.

Certainly, FIG. 1 is merely an example. In another implementation, there may be only one group of the front motor and the front motor controller or one group of the rear motor and the rear motor controller in FIG. 1.

FIG. 2 is a flowchart of a vehicle control method according to an embodiment of this application. The method may be performed by a vehicle control unit or a motor controller of a vehicle. As shown in FIG. 2, the method includes the following steps.

101: Obtain wheel speeds of two wheels on a first drive shaft of the vehicle, where output torque of a first motor corresponding to the first drive shaft is first torque.

The first drive shaft may be any drive shaft of the vehicle. For example, the first drive shaft may be a front drive shaft of the vehicle. The method is applied to the front drive shaft, so that a first difference between two wheels on the front drive shaft is controlled within a safety threshold. For another example, the first drive shaft may be a rear drive shaft of the vehicle. The method is applied to the rear drive shaft, so that a first difference between two wheels on the rear drive shaft is controlled within a safety threshold. For another example, the first drive shaft may be a front drive shaft of the vehicle, and may also be a rear drive shaft of the vehicle. The method is applied to both the front drive shaft and the rear drive shaft, so that a first difference between two wheels on the rear drive shaft is controlled within a safety threshold.

For example, a drive shaft and a motor to which the method is applied may be determined based on a configuration of a motor and a clutch. For example, the method is applied to a drive shaft and a motor that are configured with an open differential.

102: When a first difference between the two wheels on the first drive shaft of the vehicle is greater than a first safety threshold, control, based on slip rates of the two wheels on the first drive shaft, the output torque of the first motor to change from the first torque to second torque, so that the first difference between the two wheels on the first drive shaft is not greater than a second safety threshold.

The first difference is a wheel speed difference or a slip rate difference. The wheel speed difference between the two wheels on the first drive shaft of the vehicle may be directly obtained by performing subtraction on the wheel speeds of the two wheels and taking an absolute value of a subtraction result. The slip rate difference between the two wheels on the first drive shaft of the vehicle may be obtained by performing subtraction on the slip rates of the two wheels and taking an absolute value of a subtraction result. Generally, a larger slip rate difference indicates a larger wheel speed difference.

The safety threshold varies with the output torque of the first motor corresponding to the first drive shaft. The first safety threshold is a safety threshold corresponding to a case in which the output torque of the first motor is the first torque. The second safety threshold is a safety threshold corresponding to a case in which the output torque of the first motor is the second torque.

The vehicle is generally in a scenario like high-speed cornering (drifting) or off-road recovery when the first difference between the two wheels on the first drive shaft is excessively large. In this case, the first difference and the safety threshold may be changed by adjusting magnitude of the output torque of the first motor, so that the first difference between the two wheels on the first drive shaft is not greater than the safety threshold. According to the foregoing vehicle control solution, a problem of an excessively large differential speed can be resolved using only a common differential in the vehicle. In addition, in this solution, a service life of the differential can be prolonged, and costs can be controlled.

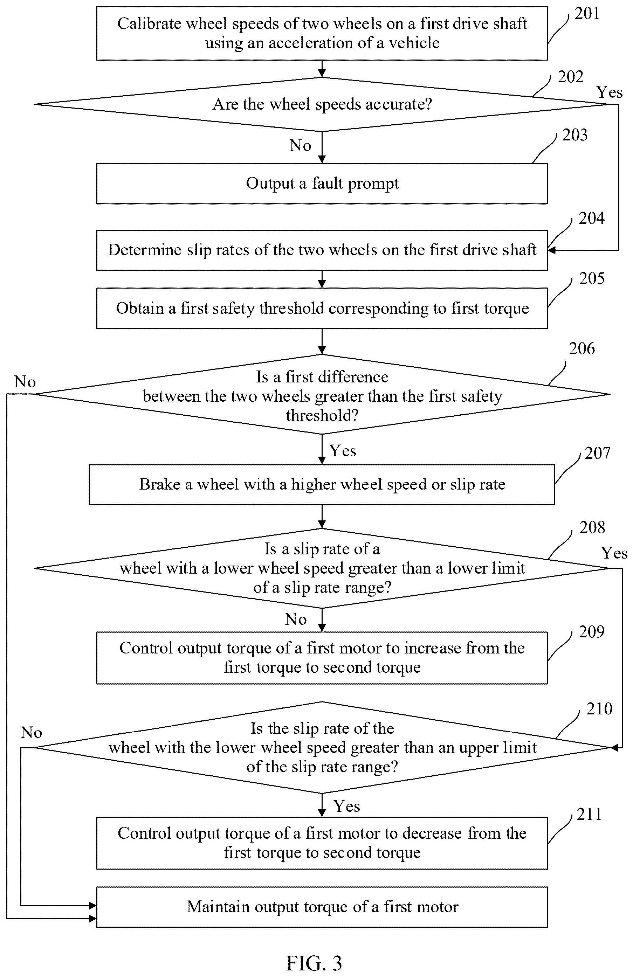

FIG. 3 is a flowchart of a vehicle control method according to an embodiment of this application. The method may be performed by a vehicle control unit or a motor controller of a vehicle. The following uses execution by the vehicle control unit as an example. When the vehicle control unit performs control, the motor controller and a braking control unit perform collaborative control. As shown in FIG. 3, the method includes the following steps.

201: Obtain wheel speeds of two wheels on a first drive shaft and a rotational speed of a first motor, where output torque of the first motor corresponding to the first drive shaft is first torque.

The vehicle control unit obtains the wheel speeds of the two wheels on the first drive shaft output by the braking control unit of the vehicle. The vehicle control unit obtains the rotational speed of the first motor output by the motor controller of the vehicle.

Optionally, the method may further include: obtaining a braking force of each wheel, for example, monitoring the braking force of each wheel via a braking pressure sensor, to provide a basis for subsequently performing single-wheel braking on the wheel.

202: Determine, based on the wheel speeds of the two wheels on the first drive shaft and the rotational speed of the first motor, whether the wheel speeds of the two wheels on the first drive shaft are accurate. Step 204 is performed when the wheel speeds of the two wheels on the first drive shaft are accurate. Step 203 is performed when the wheel speeds of the two wheels on the first drive shaft are inaccurate.

The wheel speeds of the wheels are generally collected by wheel speed sensors (or differential rotational speed sensors), for example, four wheel speed sensors in FIG. 1, and then reported to the vehicle control unit via the braking control unit. When the wheel speed sensor (or differential rotational speed sensor) is faulty, the wheel speed of the wheel is inaccurate.

For example, the rotational speed of the motor is compared with an average value of the wheel speeds of the two wheels. If a difference is greater than a specified difference, it is considered that the wheel speeds are inaccurate. If the difference is not greater than the specified difference, it is considered that the wheel speeds are accurate.

203: Output a fault prompt, to prompt that the wheel speed sensor needs to be repaired or replaced.

Step 203 is an optional step.

204: Determine slip rates of the two wheels on the first drive shaft based on the wheel speeds of the two wheels on the first drive shaft and the rotational speed of the first motor.

The slip rate is a proportion of a slip component in wheel motion, and the slip rate is a ratio of a difference between a vehicle speed and the wheel speed to the vehicle speed. The vehicle speed and the wheel speed may be an average vehicle speed and an average wheel speed, for example, an average vehicle speed and an average wheel speed in a period of time.

In some possible implementations of this application, the slip rates of the two wheels on the first drive shaft are obtained based on the wheel speeds of the two wheels and the rotational speed of the first motor. When the slip rates are calculated based on the wheel speeds of the two wheels and the rotational speed of the first motor, the vehicle speed may be first calculated based on the rotational speed of the first motor, and then the slip rates of the two wheels are calculated based on the vehicle speed and the wheel speeds of the two wheels.

In this case, an actual vehicle speed of the vehicle does not need to be used. This reduces parameter obtaining, and reduces complexity.

In another possible implementation, alternatively, the vehicle speed of the vehicle may be additionally obtained. The slip rates of the two wheels are calculated based on the vehicle speed and the wheel speeds of the two wheels.

In another possible implementation, alternatively, an acceleration of the vehicle may be additionally obtained. The vehicle speed is determined by performing integration on the acceleration of the vehicle. The slip rates of the two wheels are calculated based on the vehicle speed and the wheel speeds of the two wheels.

205: Obtain, from a correspondence between motor output torque and a threshold, a first safety threshold corresponding to a case in which the output torque of the first motor is the first torque.

In this step, the vehicle control unit first obtains the output torque of the first motor. The output torque of the first motor is sent to the vehicle control unit by a motor controller connected to the first motor. For example, a front motor controller in FIG. 1 may send output torque of a front motor to the vehicle control unit. The vehicle control unit obtains, based on the correspondence between motor output torque and a threshold, the first safety threshold corresponding to the case in which the output torque of the first motor is the first torque. The motor output torque is negatively correlated with the threshold. The correspondence may be stored in the vehicle control unit or another device having a storage function in the vehicle.

The motor output torque and the threshold may be obtained through a bench durability test of the vehicle. For example, under a piece of output torque, a wheel speed difference or a slip rate difference between the two wheels is controlled to change in ascending order. Critical value for both intact and damaged differentials are determined. The critical value is used as a threshold corresponding to the output torque. Alternatively, under a wheel speed difference or a slip rate difference, the output torque is controlled to change in ascending order. Critical values for both intact and damaged differentials are determined. The critical value is used as the output torque, and the wheel speed difference or the slip rate difference is used as a corresponding threshold. In this manner, a threshold corresponding to each piece of output torque is determined, to form a correspondence.

Controlling the wheel speed difference or the slip rate difference between the two wheels to change in ascending order may be implemented by applying different braking forces to the two wheels or by adding different loads to the two wheels.

206: Determine whether a first difference between the two wheels on the first drive shaft of the vehicle is greater than the first safety threshold. Step 207 is performed when the first difference between the two wheels on the first drive shaft is greater than the first safety threshold.

For example, it is determined whether the wheel speed difference between the two wheels on the first drive shaft of the vehicle is greater than the first safety threshold. After receiving the wheel speed of each wheel, the vehicle control unit obtains the wheel speed difference between the two wheels on the first drive shaft by performing subtraction on the wheel speeds of the two wheels that belong to the same drive shaft.

For another example, it is determined whether the slip rate difference between the two wheels on the first drive shaft of the vehicle is greater than the first safety threshold. A safety threshold corresponding to the wheel speed difference is different from a safety threshold corresponding to the slip rate difference.

When the first difference between the two wheels on the first drive shaft is not greater than the first safety threshold, a subsequent step may not be performed, and the output torque of the first motor is maintained.

207: Brake a wheel with a higher wheel speed or slip rate in the two wheels on the first drive shaft.

A determined braking force needs to be greater than a braking force monitored from the wheel with the higher current wheel speed or slip rate.

Braking the wheel means performing wheel side hydraulic braking on the wheel, for example, providing braking pressure for a wheel braking apparatus (for example, a braking pump) in a braking loop, to implement braking.

In a possible implementation, the vehicle control unit determines a target difference obtained after braking, where the target difference obtained after braking is less than the first safety threshold, for example, less than the first safety threshold by more than a specific value, for example, less than the first safety threshold by more than 20%; and providing the braking force based on the target difference, to brake the wheel with the higher wheel speed or slip rate in the two wheels.

For the two wheels on the first drive shaft, a wheel with a lower wheel speed is a first wheel, and the wheel with the higher wheel speed is a second wheel. During braking, a target wheel speed of the second wheel is first determined based on the wheel speed of the first wheel. The target wheel speed can make the wheel speed difference between the first wheel and the second wheel reach the target difference. Then, a wheel speed that needs to be decreased through braking is determined based on the target wheel speed and the current wheel speed of the second wheel, and a corresponding braking force is determined based on the wheel speed that needs to be decreased through braking.

There is a mapping relationship between the braking force and the to-be-decreased wheel speed. The mapping relationship may be obtained through a bench test of the vehicle. Details are not described herein.

After the wheel is braked to make the first difference between the two wheels not greater than the first safety threshold, braking of the wheel with the higher wheel speed or slip rate in the two wheels on the first drive shaft is stopped.

In another possible implementation, the vehicle control unit determines a target difference obtained after braking. The target difference obtained after braking is greater than the first safety threshold, but a difference between the target difference and the first safety threshold is less than a difference between the first difference and the first safety threshold.

After the wheel is braked for a period of time, braking of the wheel with the higher wheel speed or slip rate in the two wheels on the first drive shaft is stopped. When braking is stopped, the first difference between the two wheels is still greater than the first safety threshold, but the difference between the first difference and the first safety threshold becomes smaller.

Optionally, step 207 may alternatively be performed after step 208 and step 210.

208: Determine whether a slip rate of a wheel with a lower wheel speed in the two wheels on the first drive shaft is greater than a lower limit of a slip rate range. Step 209 is performed when the slip rate of the wheel with the lower wheel speed in the two wheels on the first drive shaft is less than the lower limit of the slip rate range. Step 210 is performed when the slip rate of the wheel with the lower wheel speed in the two wheels on the first drive shaft is not less than the lower limit of the slip rate range.

Herein, when it is determined whether the slip rate of the wheel with the lower wheel speed in the two wheels is greater than the lower limit of the slip rate range, it may be determined whether a slip rate obtained before braking is greater than the lower limit of the slip rate range, or whether a slip rate obtained after braking is greater than the lower limit of the slip rate range. The wheel with the higher wheel speed is braked in step 207, but the slip rate of the wheel with the lower wheel speed is not clearly affected by the braking. Therefore, the slip rate and the slip rate of the wheel with the lower wheel speed in the two wheels obtained before braking and after braking do not change or change slightly.

A current scenario of the vehicle may be identified based on a relationship between the slip rate of the wheel with the lower wheel speed in the two wheels on the first drive shaft and the slip rate range. Then, the output torque of the first motor may be controlled based on the current scenario of the vehicle.

The slip rate range may be obtained through a tire characteristic test. A tire traction and a slip rate are in a quadratic function relationship. Within the slip rate range, the wheel has an optimal traction. The slip rate range may be 10% to 25%.

When the slip rate of the wheel with the lower wheel speed in the two wheels on the first drive shaft is less than the lower limit of the slip rate range, it is determined that the vehicle is in a recovery scenario in which a wheel on one side maintains good traction, for example, an off-road recovery scenario.

209: Control the output torque of the first motor to increase from the first torque to second torque, so that the first difference between the two wheels on the first drive shaft is not greater than a second safety threshold.

The second safety threshold is a safety threshold corresponding to a case in which the output torque of the first motor is the second torque.

After the first difference between the two wheels reaches the target difference through braking, the output torque of the first motor is controlled to increase from the first torque to the second torque, so that the first difference between the two wheels on the first drive shaft is not greater than the second safety threshold.

In a manner, controlling the first motor to increase the output torque may be in a step-by-step manner until the first difference between the two wheels on the first drive shaft is equal to the second safety threshold, or until the first difference between the two wheels on the first drive shaft is less than the second safety threshold, and a difference between the two wheels is small, for example, is 1% to 5%.

During step-by-step control, output torque per unit is increased each time on a basis of previous output torque. After control is completed, it is determined whether the first difference between the two wheels is greater than the second safety threshold. The foregoing process is repeated until the first difference between the two wheels is not greater than the second safety threshold. The unit increased each time is determined based on control precision of the motor.

In another manner, controlling the first motor to increase the output torque may be first determining the second torque corresponding to the first difference between the two wheels, where the safety threshold corresponding to the second torque is greater than the first difference between the two wheels. Because the first difference between the two wheels increases as the torque increases, a margin may be reserved when the second torque is determined. For example, maximum safety output torque is determined based on a first difference obtained after braking. Then, a specific amount or percentage (for example, 10%) is decreased on this basis, and a result is used as the second torque, to ensure that the first difference still does not exceed the safety threshold after the output torque is increased.

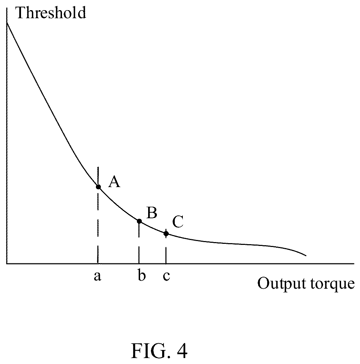

FIG. 4 shows a correspondence between torque and a threshold. The torque is negatively correlated with the threshold. As shown in FIG. 4, before step 208 is performed, the output torque of the first motor is a, and the corresponding first safety threshold is A. After braking is performed, the wheel speed difference between the two wheels on the first drive shaft decreases to C. In this case, output torque c corresponding to a case in which C is used as the threshold cannot be directly selected as a torque value, but output torque b smaller than c is to be selected, to ensure that, after the output torque is increased to b, the first difference does not exceed a second safety threshold B corresponding to b.

To be specific, the second torque is determined based on the first difference between the two wheels on the first drive shaft. A first control instruction is output based on the second torque. The first control instruction is used to control the output torque of the first motor to increase from the first torque to the second torque.

When the vehicle is in the recovery scenario, the output torque of the first motor needs to be increased, so that the vehicle obtains greater kinetic energy for recovery. However, the motor output torque is in a negative correlation with the safety threshold, increasing the output torque of the first motor decreases the safety threshold, and increasing the output torque also increases the first difference. Consequently, it cannot be ensured, when a kinetic energy requirement is met by increasing only the output torque, that the first difference between the two wheels is not greater than the second safety threshold. In view of this, in this implementation of this application, the wheel with the higher wheel speed or slip rate in the two wheels is first braked, to decrease the first difference, and then the output torque is increased on this basis, to ensure that the first difference between the two wheels on the first drive shaft is not greater than the second safety threshold when the output torque is increased.

In this scenario, through a combination of braking and increasing the output torque, the kinetic energy requirement in the scenario of the vehicle can be met, and safety of the differential can also be ensured when it is ensured that the wheel speed difference is below the safety threshold.

A torque increment formed by increasing the torque is used to compensate for a power loss caused by single-side braking. In addition to being limited to the first difference, the increment may be further positively correlated with single-wheel braking pressure. To be specific, in addition to ensuring that the first difference does not exceed the safety threshold, during selection, a larger torque increment may be selected when the single-wheel braking pressure is greater.

210: Determine whether the slip rate of the wheel with the lower wheel speed in the two wheels on the first drive shaft is greater than an upper limit of the slip rate range. Step 211 is performed when the slip rate of the wheel with the lower wheel speed in the two wheels on the first drive shaft is greater than the upper limit of the slip rate range. The output torque of the first motor is maintained when the slip rate of the wheel with the lower wheel speed in the two wheels on the first drive shaft is not greater than the upper limit of the slip rate range.

Herein, when it is determined whether the slip rate of the wheel with the lower wheel speed in the two wheels is greater than the upper limit of the slip rate range, it may be determined whether the slip rate obtained before braking is greater than the upper limit of the slip rate range, or whether the slip rate obtained after braking is greater than the upper limit of the slip rate range.

When the slip rate of the wheel with the lower wheel speed in the two wheels on the first drive shaft is greater than the upper limit of the slip rate range, it is determined that the vehicle is in a drifting scenario in which wheels on two sides have no grip, for example, a high-speed cornering (drifting) scenario.

211: Control the output torque of the first motor to decrease from the first torque to second torque, so that the first difference between the two wheels on the first drive shaft is not greater than a second safety threshold.

After the first difference between the two wheels reaches the target difference through braking, the output torque of the first motor is controlled to decrease from the first torque to the second torque, so that the first difference between the two wheels on the first drive shaft is not greater than the second safety threshold.

The second torque is determined based on the first difference between two wheels on the first drive shaft. A second control instruction is output based on the second torque. The second control instruction is used to control the first motor to increase/decrease the torque.

In a manner, the target difference obtained after braking is less than the first safety threshold, and the output torque is continuously decreased subsequently, so that it can be definitely ensured that the first difference between the two wheels is not greater than the second safety threshold. In another manner, alternatively, the target difference obtained after braking may not be less than the first safety threshold, or even not less than the subsequent second safety threshold, and the output torque is continuously decreased subsequently. The two manners are combined, so that the first difference between the two wheels is not greater than the second safety threshold.

When the slip rate of the wheel with the lower wheel speed in the two wheels on the first drive shaft is within the slip rate range, it is considered that the vehicle is in a transition working condition scenario, and torque increase/decrease control is not performed on the first motor according to a differential protection strategy.

For a four-wheel-drive vehicle, when a first drive shaft is controlled, a second drive shaft may be further controlled. For example, the method may further include:
when the slip rate of the wheel with the lower wheel speed in the two wheels on the first drive shaft is greater than the upper limit of the slip rate range, and a slip rate of a wheel with a lower wheel speed in two wheels on a second drive shaft of the vehicle is not greater than the upper limit of the slip rate range, controlling output torque of a second motor corresponding to the second drive shaft of the vehicle to increase from third torque to fourth torque, and making a first difference between the two wheels on the second drive shaft not greater than a third safety threshold, where the third safety threshold is a safety threshold corresponding to a case in which the output torque of the second motor is the fourth torque.

For the four-wheel-drive vehicle, when a slip rate of a wheel with a lower wheel speed on another drive shaft does not exceed the upper limit, torque transfer may be performed, to ensure an overall driving force of the vehicle.

The output torque of the second motor may be controlled in a step-by-step manner or may be controlled after safety output torque corresponding to the first difference between the two wheels on the second drive shaft is determined. For a detailed process, refer to the foregoing control on the first motor.

When a slip rate of a wheel with a lower wheel speed in two wheels on a second drive shaft of the vehicle is greater than an upper limit of the slip rate range, output torque decrease control is performed on a second motor corresponding to the second drive shaft. For a detailed process, refer to the foregoing control on the first motor.

In addition, in the wheel speed difference control solution provided in this embodiment of this application, intervention is earlier than that in a traction control system. This avoids a power problem caused by intervention of the traction control system in a running process of the vehicle, and ensures motion performance.

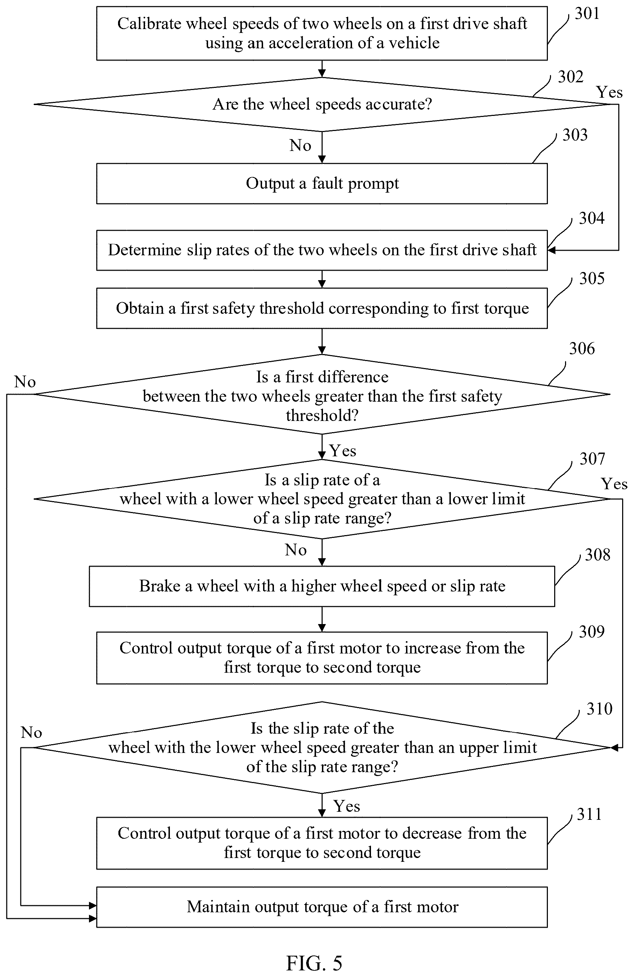

FIG. 5 is a flowchart of a vehicle control method according to an embodiment of this application. The method may be performed by a vehicle control unit or a motor controller of a vehicle. The following uses execution by the motor controller as an example. When the motor controller performs control, a braking control unit performs collaborative control. As shown in FIG. 5, the method includes the following steps.

301: Obtain wheel speeds of two wheels on a first drive shaft and a rotational speed of a first motor, where output torque of the first motor corresponding to the first drive shaft is first torque.

The motor controller obtains, via the vehicle control unit, the wheel speeds of the two wheels on the first drive shaft output by the braking control unit of the vehicle. The motor controller obtains the rotational speed detected by a sensor in the first motor.

302: Determine, based on the wheel speeds of the two wheels on the first drive shaft and the rotational speed of the first motor, whether the wheel speeds of the two wheels on the first drive shaft are accurate. Step 304 is performed when the wheel speeds of the two wheels on the first drive shaft are accurate. Step 303 is performed when the wheel speeds of the two wheels on the first drive shaft are inaccurate.

For a detailed process of step 302, refer to step 202. Details are not described herein again.

303: Output a fault prompt, to prompt that the wheel speed sensor needs to be repaired or replaced.

Step 303 is an optional step.

304: Determine slip rates of the two wheels on the first drive shaft based on the wheel speeds of the two wheels on the first drive shaft and the rotational speed of the first motor.

For a detailed process of step 304, refer to step 204. Details are not described herein again.

305: Obtain, from a correspondence between motor output torque and a threshold, a first safety threshold corresponding to a case in which the output torque of the first motor is the first torque.

For a detailed process of step 305, refer to step 205. Details are not described herein again.

306: Determine whether a first difference between the two wheels on the first drive shaft of the vehicle is greater than the first safety threshold. Step 307 is performed when the first difference between the two wheels on the first drive shaft is greater than the first safety threshold.

When the first difference between the two wheels on the first drive shaft is not greater than the first safety threshold, a subsequent step may not be performed, and the output torque of the first motor is maintained.

For a detailed process of step 306, refer to step 206. Details are not described herein again.

307: Determine whether a slip rate of a wheel with a lower wheel speed in the two wheels on the first drive shaft is greater than a lower limit of a slip rate range. Step 308 is performed when the slip rate of the wheel with the lower wheel speed in the two wheels on the first drive shaft is less than the lower limit of the slip rate range. Step 310 is performed when the slip rate of the wheel with the lower wheel speed in the two wheels on the first drive shaft is not less than the lower limit of the slip rate range.

For a detailed process of step 307, refer to step 208. Details are not described herein again.

308: Brake a wheel with a higher wheel speed or slip rate in the two wheels on the first drive shaft.

For a detailed process of step 308, refer to step 207. Details are not described herein again.

309: Control the output torque of the first motor to increase from the first torque to second torque, so that the first difference between the two wheels on the first drive shaft is not greater than a second safety threshold.

For a detailed process of step 309, refer to step 209. Details are not described herein again.

310: Determine whether the slip rate of the wheel with the lower wheel speed in the two wheels on the first drive shaft is greater than an upper limit of the slip rate range. Step 311 is performed when the slip rate of the wheel with the lower wheel speed in the two wheels on the first drive shaft is greater than the upper limit of the slip rate range. The output torque of the motor is maintained when the slip rate of the wheel with the lower wheel speed in the two wheels on the first drive shaft is not greater than the upper limit of the slip rate range.

For a detailed process of step 310, refer to step 210. Details are not described herein again.

311: Control the output torque of the first motor to decrease from the first torque to second torque, so that the first difference between the two wheels on the first drive shaft is not greater than a second safety threshold.

For a detailed process of step 311, refer to step 211. Details are not described herein again.

Through comparison, the method shown in FIG. 5 differs from the method provided in FIG. 2 in that, in addition to a difference between execution bodies, braking is performed only in a recovery scenario, and braking is not performed in a high-speed cornering (drifting) scenario.

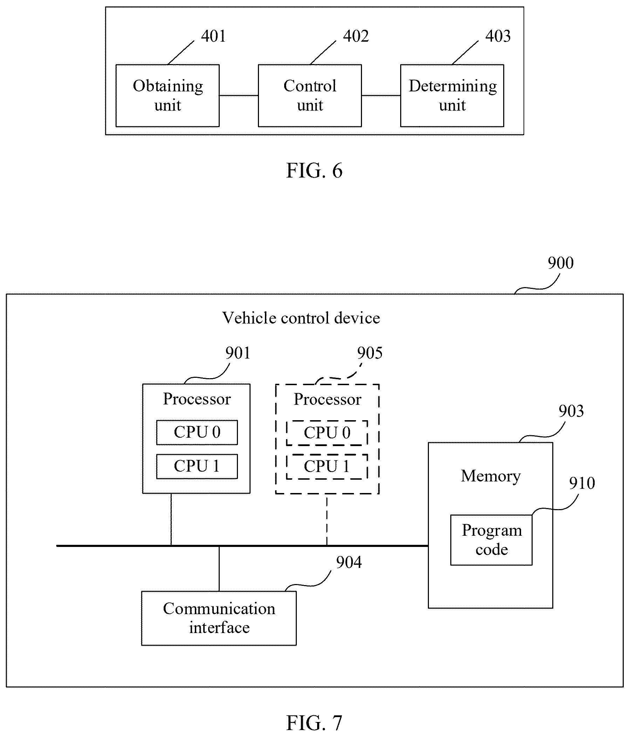

FIG. 6 is a block diagram of a vehicle control apparatus according to an embodiment of this application. The vehicle control apparatus may be implemented as all or a part of a vehicle control unit or a motor controller using software, hardware, or a combination thereof. The vehicle control apparatus may include an obtaining unit 401 and a control unit 402.

The obtaining unit 401 is configured to obtain wheel speeds of two wheels on a first drive shaft of a vehicle, where the first drive shaft is any drive shaft of the vehicle, and output torque of a first motor corresponding to the first drive shaft is first torque.

The control unit 402 is configured to: when a first difference between the two wheels on the first drive shaft is greater than a first safety threshold, control, based on slip rates of the two wheels on the first drive shaft, the output torque of the first motor to change from the first torque to second torque, so that the first difference between the two wheels on the first drive shaft is not greater than a second safety threshold, where the first difference is a wheel speed difference or a slip rate difference, the first safety threshold is a safety threshold corresponding to a case in which the output torque of the first motor is the first torque, and the second safety threshold is a safety threshold corresponding to a case in which the output torque of the first motor is the second torque.

Optionally, the second torque is greater than the first torque.

The control unit 402 is configured to: when a slip rate of a wheel with a lower wheel speed in the two wheels on the first drive shaft is less than a lower limit of a slip rate range, brake a wheel with a higher wheel speed or slip rate in the two wheels on the first drive shaft; and control the output torque of the first motor to increase from the first torque to the second torque, so that the first difference between the two wheels on the first drive shaft is not greater than the second safety threshold.

Optionally, the second torque is less than the first torque.

The control unit 402 is configured to: when a slip rate of a wheel with a lower wheel speed in the two wheels on the first drive shaft is greater than an upper limit of a slip rate range, control the output torque of the first motor to decrease from the first torque to the second torque, so that the first difference between the two wheels on the first drive shaft is not greater than the second safety threshold.

Optionally, the second torque is less than the first torque.

The control unit 402 is configured to: when a slip rate of a wheel with a lower wheel speed in the two wheels on the first drive shaft is greater than an upper limit of a slip rate range, brake a wheel with a higher wheel speed or slip rate in the two wheels on the first drive shaft; and control the output torque of the first motor to decrease from the first torque to the second torque, so that the first difference between the two wheels on the first drive shaft is not greater than the second safety threshold.

Optionally, the control unit 402 is configured to: determine the second torque based on the first difference between the two wheels on the first drive shaft; output a control instruction based on the second torque; and control the output torque of the first motor using the control instruction, so that the first difference between the two wheels on the first drive shaft is not greater than the second safety threshold.

Optionally, the control unit 402 is further configured to: when the slip rate of the wheel with the lower wheel speed in the two wheels on the first drive shaft is greater than the upper limit of the slip rate range, and a slip rate of a wheel with a lower wheel speed in two wheels on a second drive shaft of the vehicle is not greater than the upper limit of the slip rate range, control output torque of a second motor corresponding to the second drive shaft of the vehicle to increase from third torque to fourth torque, and make a first difference between the two wheels on the second drive shaft not greater than a third safety threshold, where the third safety threshold is a safety threshold corresponding to a case in which the output torque of the second motor is the fourth torque.

Optionally, the obtaining unit 401 is further configured to obtain a rotational speed of the first motor.

The apparatus further includes: a determining unit 403, configured to: determine, based on the rotational speed of the first motor and the wheel speeds of the two wheels on the first drive shaft, whether the wheel speeds are accurate; and when the wheel speeds of the two wheels on the first drive shaft are accurate, determine the slip rates of the two wheels on the first drive shaft based on the wheel speeds of the two wheels on the first drive shaft and the rotational speed of the first motor.

Optionally, the apparatus includes the vehicle control unit, or the apparatus includes the motor controller.

Optionally, the obtaining unit 401 is further configured to: obtain a correspondence between motor output torque and a threshold, where the motor output torque is negatively correlated with the threshold; and obtain, from the correspondence between motor output torque and a threshold, the first safety threshold corresponding to the case in which the output torque of the first motor is the first torque.

When the vehicle control apparatus provided in the foregoing embodiment works, division into the foregoing functional units is used merely as an example for illustration. During actual application, the foregoing functions may be allocated to different functional units and implemented based on a requirement. To be specific, an inner structure of a device is divided into different functional units, to implement all or some of the functions described above. In addition, the vehicle control apparatus provided in the foregoing embodiment and the vehicle control method embodiments pertain to a same concept. For a specific implementation process of the apparatus, refer to the method embodiments. Details are not described herein again.

The foregoing descriptions of procedures corresponding to accompanying drawings have respective focuses. For a part of a procedure that is not described in detail, refer to related descriptions of another procedure.

An embodiment of this application further provides a vehicle. The vehicle includes the vehicle control apparatus shown in FIG. 6 and a motor. The vehicle control apparatus is connected to the motor.

FIG. 7 is a diagram of a structure of a vehicle control device 900 according to an example embodiment of this application. The vehicle control device 900 shown in FIG. 7 is configured to perform operations related to the vehicle control method shown in FIG. 2, FIG. 3, or FIG. 5. The vehicle control device 900 may include the foregoing vehicle control unit or motor controller. The vehicle control device 900 may be implemented using a general bus architecture.

As shown in FIG. 7, the vehicle control device 900 includes at least one processor 901, a memory 903, and at least one communication interface 904.

The processor 901 is, for example, a general-purpose central processing unit (central processing unit, CPU), a digital signal processor (digital signal processor, DSP), a network processor (network processor, NP), a graphics processing unit (Graphics Processing Unit, GPU), a neural-network processing unit (neural-network processing unit, NPU), a data processing unit (Data Processing Unit, DPU), a microprocessor, or one or more integrated circuits configured to implement the solutions of this application. For example, the processor 901 includes an application-specific integrated circuit (application-specific integrated circuit, ASIC), a programmable logic device (programmable logic device, PLD) or another programmable logic device, a transistor logic device, a hardware component, or any combination thereof. The PLD is, for example, a complex programmable logic device (complex programmable logic device, CPLD), a field-programmable gate array (field-programmable gate array, FPGA), generic array logic (generic array logic, GAL), or any combination thereof. The processor may implement or execute various logical blocks, modules, and circuits described with reference to the content disclosed in embodiments of the present invention. The processor may alternatively be a combination for implementing a computing function, for example, a combination including one or more microprocessors, or a combination of the DSP and a microprocessor.

Optionally, the vehicle control device 900 further includes a bus. The bus is configured to transfer information between components of the vehicle control device 900. The bus may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one bold line is used for representation in FIG. 7, but this does not mean that there is only one bus or only one type of bus.

The memory 903 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only memory, EEPROM), a compact disc read-only memory (compact disc read-only memory, CD-ROM) or another compact disc storage, an optical disk storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of an instruction structure or a data structure and that can be accessed by a computer, but is not limited thereto. For example, the memory 903 exists independently, and is connected to the processor 901 through the bus. The memory 903 may alternatively be integrated with the processor 901.

The communication interface 904 is any apparatus like a transceiver, and is configured to communicate with another device or a communication network. The communication network may be an ethernet, a radio access network (RAN), a Bluetooth network, or the like. The communication interface 904 may include a wired communication interface, and may further include a wireless communication interface. In this embodiment of this application, the communication interface 904 may be used by the vehicle control device 900 to communicate with another device.

During specific implementation, in an embodiment, the processor 901 may include one or more CPUs, for example, a CPU 0 and a CPU 1 shown in FIG. 7. Each of these processors may be a single-core processor (single-CPU), or may be a multi-core processor (multi-CPU). The processor herein may be one or more devices, circuits, and/or processing cores configured to process data (for example, computer program instructions).

During specific implementation, in an embodiment, the vehicle control device 900 may include a plurality of processors, for example, the processor 901 and a processor 905 shown in FIG. 7. Each of the processors may be a single-core processor (single-CPU) or a multi-core processor (multi-CPU). The processor herein may be one or more devices, circuits, and/or processing cores configured to process data (for example, computer program instructions).

During specific implementation, in an embodiment, the vehicle control device 900 may further include an output device and an input device. The output device communicates with the processor 901, and may display information in a plurality of manners. For example, the output device may be a liquid crystal display (liquid crystal display, LCD), a light-emitting diode (light-emitting diode, LED) display device, a cathode ray tube (cathode ray tube, CRT) display device, or a projector (projector). The input device communicates with the processor 901, and may receive a user input in a plurality of manners. For example, the input device may be a touchscreen device or a sensing device.

In some embodiments, the memory 903 is configured to store program code 910 for executing the solutions in this application. The processor 901 may execute the program code 910 stored in the memory 903. To be specific, the vehicle control device 900 may implement, via the processor 901 and through the program code 910 in the memory 903, the vehicle control methods provided in the method embodiments. The program code 910 may include one or more software modules. Optionally, the processor 901 may alternatively store the program code or the instructions for executing the solutions of this application.

In a specific embodiment, the vehicle control device 900 in this embodiment of this application may correspond to a motor control module or the motor controller in each of the foregoing method embodiments. The processor 901 in the vehicle control device 900 reads instructions in the memory 903, to enable the vehicle control device 900 shown in FIG. 7 to perform all or some operations performed by the motor control module or the motor controller.

Specifically, the processor 901 is configured to: obtain wheel speeds of two wheels on a first drive shaft of a vehicle, where the first drive shaft is any drive shaft of the vehicle, and output torque of a first motor corresponding to the first drive shaft is first torque; and when a first difference between the two wheels on the first drive shaft is greater than a first safety threshold, control, based on slip rates of the two wheels on the first drive shaft, the output torque of the first motor to change from the first torque to second torque, so that the first difference between the two wheels on the first drive shaft is not greater than a second safety threshold, where the first difference is a wheel speed difference or a slip rate difference, the first safety threshold is a safety threshold corresponding to a case in which the output torque of the first motor is the first torque, and the second safety threshold is a safety threshold corresponding to a case in which the output torque of the first motor is the second torque.

For brevity, another optional implementation is not described herein again.

The vehicle control device 900 may further correspond to the vehicle control apparatus shown in FIG. 6. Each functional module in the vehicle control apparatus is implemented using software of the vehicle control device 900. In other words, the functional modules included in the vehicle control apparatus are generated after the processor 901 of the vehicle control device 900 reads the program code 910 stored in the memory 903.

The steps of the vehicle control method shown in FIG. 2, FIG. 3, or FIG. 5 are completed via an integrated logic circuit of hardware in the processor of the vehicle control device 900 or through instructions in a form of software. The steps of the methods disclosed with reference to embodiments of this application may be directly performed by a hardware processor, or may be performed by a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory, and completes the steps of the foregoing methods in combination with the hardware of the processor. To avoid repetition, details are not described herein again.

An embodiment of this application further provides a chip. The chip includes an input interface, an output interface, a processor, and a memory. The input interface, the output interface, the processor, and the memory are connected to each other through an internal connection path. The processor is configured to execute code in the memory. When the code is executed, the processor is configured to perform any one of the foregoing vehicle control methods.

It should be understood that the processor may be a CPU, or may be another general-purpose processor, a DSP, an ASIC, an FPGA or another programmable logic device, a discrete gate or a transistor logic device, a discrete hardware component, or the like. The general-purpose processor may be a microprocessor, or may be any conventional processor or the like. It should be noted that the processor may be a processor that supports an ARM architecture.

Further, in an optional embodiment, there are one or more processors and one or more memories. Optionally, the memory may be integrated with the processor, or the memory and the processor may be separately disposed. The memory may include a read-only memory and a random access memory, and provide instructions and data to the processor. The memory may further include a non-volatile random access memory. For example, the memory may further store a reference block and a target block.

The memory may be a volatile memory or a non-volatile memory, or may include both the volatile memory and the non-volatile memory. The non-volatile memory may be a ROM, a PROM, an EPROM, an EEPROM, or a flash memory. The volatile memory may be a RAM, and is used as an external cache. By way of example, but not limitation, many forms of RAMs may be used, for example, an SRAM, a DRAM, an SDRAM, a DDR SDRAM, an ESDRAM, an SLDRAM, and a DR RAM.

An embodiment of this application further provides a computer-readable storage medium. The computer-readable storage medium stores computer instructions. When the computer instructions stored in the computer-readable storage medium are executed by a vehicle control device, the vehicle control device is enabled to perform the vehicle control methods provided above.

An embodiment of this application further provides a computer program product including instructions. When the computer program product runs on a vehicle control device, the vehicle control device is enabled to perform the vehicle control methods provided above.

All or some of the foregoing embodiments may be implemented using software, hardware, firmware, or any combination thereof. When the software is used for implementation, some or all of the foregoing embodiments may be implemented in a form of a computer program product. The computer program product includes one or more computer instructions. When the computer program instructions are loaded and executed on a computer, all or some of the procedures or functions in this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device like a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

A person of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, an optical disc, or the like.

The foregoing descriptions are merely optional embodiments of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A vehicle control method, wherein the method comprises:
obtaining wheel speeds of two wheels on a first drive shaft of a vehicle, wherein the first drive shaft is any drive shaft of the vehicle, and output torque of a first motor corresponding to the first drive shaft is first torque; and
when a first difference between the two wheels on the first drive shaft is greater than a first safety threshold, controlling, based on slip rates of the two wheels on the first drive shaft, the output torque of the first motor to change from the first torque to second torque, so that the first difference between the two wheels on the first drive shaft is not greater than a second safety threshold, wherein the first difference is a wheel speed difference or a slip rate difference, the first safety threshold is a safety threshold corresponding to a case in which the output torque of the first motor is the first torque, and the second safety threshold is a safety threshold corresponding to a case in which the output torque of the first motor is the second torque.

2. The method according to claim 1, wherein the second torque is greater than the first torque; and
controlling, based on the slip rates of the two wheels on the first drive shaft, the output torque of the first motor to change from the first torque to the second torque, so that the first difference between the two wheels on the first drive shaft is not greater than the second safety threshold comprises:
when a slip rate of a wheel with a lower wheel speed in the two wheels on the first drive shaft is less than a lower limit of a slip rate range, braking a wheel with a higher wheel speed or slip rate in the two wheels on the first drive shaft; and
controlling the output torque of the first motor to increase from the first torque to the second torque, so that the first difference between the two wheels on the first drive shaft is not greater than the second safety threshold.

3. The method according to claim 1, wherein the second torque is less than the first torque; and
controlling, based on the slip rates of the two wheels on the first drive shaft, the output torque of the first motor to change from the first torque to the second torque, so that the first difference between the two wheels on the first drive shaft is not greater than the second safety threshold comprises:
when a slip rate of a wheel with a lower wheel speed in the two wheels on the first drive shaft is greater than an upper limit of a slip rate range, controlling the output torque of the first motor to decrease from the first torque to the second torque, so that the first difference between the two wheels on the first drive shaft is not greater than the second safety threshold.

4. The method according to claim 1, wherein the second torque is less than the first torque; and
controlling, based on the slip rates of the two wheels on the first drive shaft, the output torque of the first motor to change from the first torque to the second torque, so that the first difference between the two wheels on the first drive shaft is not greater than the second safety threshold comprises:
when a slip rate of a wheel with a lower wheel speed in the two wheels on the first drive shaft is greater than an upper limit of a slip rate range, braking a wheel with a higher wheel speed or slip rate in the two wheels on the first drive shaft; and
controlling the output torque of the first motor to decrease from the first torque to the second torque, so that the first difference between the two wheels on the first drive shaft is not greater than the second safety threshold.

5. The method according to any one of claims 1 to 4, wherein controlling the output torque of the first motor to change from the first torque to the second torque, so that the first difference between the two wheels on the first drive shaft is not greater than the second safety threshold comprises:
determining the second torque based on the first difference between the two wheels on the first drive shaft; outputting a control instruction based on the second torque; and controlling the output torque of the first motor using the control instruction, so that the first difference between the two wheels on the first drive shaft is not greater than the second safety threshold.

6. The method according to any one of claims 1 to 5, wherein the method further comprises:
when the slip rate of the wheel with the lower wheel speed in the two wheels on the first drive shaft is greater than the upper limit of the slip rate range, and a slip rate of a wheel with a lower wheel speed in two wheels on a second drive shaft of the vehicle is not greater than the upper limit of the slip rate range, controlling output torque of a second motor corresponding to the second drive shaft of the vehicle to increase from third torque to fourth torque, and making a first difference between the two wheels on the second drive shaft not greater than a third safety threshold, wherein the third safety threshold is a safety threshold corresponding to a case in which the output torque of the second motor is the fourth torque.

7. The method according to any one of claims 1 to 6, wherein the method further comprises:
obtaining a rotational speed of the first motor; and
determining, based on the rotational speed of the first motor and the wheel speeds of the two wheels on the first drive shaft, whether the wheel speeds are accurate; and when the wheel speeds of the two wheels on the first drive shaft are accurate, determining the slip rates of the two wheels on the first drive shaft based on the wheel speeds of the two wheels on the first drive shaft and the rotational speed of the first motor.

8. The method according to any one of claims 1 to 7, wherein the method is performed by a vehicle control unit, or the method is performed by a motor controller.

9. The method according to any one of claims 1 to 8, wherein the method further comprises:
obtaining a correspondence between motor output torque and a threshold, wherein the motor output torque is negatively correlated with the threshold; and
obtaining, from the correspondence between motor output torque and a threshold, the first safety threshold corresponding to the output torque of the first motor before dynamic control.

10. A vehicle control apparatus, wherein the apparatus comprises:
an obtaining unit, configured to obtain wheel speeds of two wheels on a first drive shaft of a vehicle, wherein the first drive shaft is any drive shaft of the vehicle, and output torque of a first motor corresponding to the first drive shaft is first torque; and
a control unit, configured to: when a first difference between the two wheels on the first drive shaft is greater than a first safety threshold, control, based on slip rates of the two wheels on the first drive shaft, the output torque of the first motor to change from the first torque to second torque, so that the first difference between the two wheels on the first drive shaft is not greater than a second safety threshold, wherein the first difference is a wheel speed difference or a slip rate difference, the first safety threshold is a safety threshold corresponding to a case in which the output torque of the first motor is the first torque, and the second safety threshold is a safety threshold corresponding to a case in which the output torque of the first motor is the second torque.

11. The apparatus according to claim 10, wherein the second torque is greater than the first torque; and
the control unit is configured to: when a slip rate of a wheel with a lower wheel speed in the two wheels on the first drive shaft is less than a lower limit of a slip rate range, brake a wheel with a higher wheel speed or slip rate in the two wheels on the first drive shaft; and control the output torque of the first motor to increase from the first torque to the second torque, so that the first difference between the two wheels on the first drive shaft is not greater than the second safety threshold.

12. The apparatus according to claim 10, wherein the second torque is less than the first torque; and
the control unit is configured to: when a slip rate of a wheel with a lower wheel speed in the two wheels on the first drive shaft is greater than an upper limit of a slip rate range, control the output torque of the first motor to decrease from the first torque to the second torque, so that the first difference between the two wheels on the first drive shaft is not greater than the second safety threshold.

13. The apparatus according to claim 10, wherein the second torque is less than the first torque; and
the control unit is configured to: when a slip rate of a wheel with a lower wheel speed in the two wheels on the first drive shaft is greater than an upper limit of a slip rate range, brake a wheel with a higher wheel speed or slip rate in the two wheels on the first drive shaft; and control the output torque of the first motor to decrease from the first torque to the second torque, so that the first difference between the two wheels on the first drive shaft is not greater than the second safety threshold.

14. The apparatus according to any one of claims 10 to 13, wherein the control unit is configured to: determine the second torque based on the first difference between the two wheels on the first drive shaft; output a control instruction based on the second torque; and control the output torque of the first motor using the control instruction, so that the first difference between the two wheels on the first drive shaft is not greater than the second safety threshold.

15. The apparatus according to any one of claims 10 to 14, wherein the control unit is further configured to: when the slip rate of the wheel with the lower wheel speed in the two wheels on the first drive shaft is greater than the upper limit of the slip rate range, and a slip rate of a wheel with a lower wheel speed in two wheels on a second drive shaft of the vehicle is not greater than the upper limit of the slip rate range, control output torque of a second motor corresponding to the second drive shaft of the vehicle to increase from third torque to fourth torque, and make a first difference between the two wheels on the second drive shaft not greater than a third safety threshold, wherein the third safety threshold is a safety threshold corresponding to a case in which the output torque of the second motor is the fourth torque.

16. The apparatus according to any one of claims 10 to 15, wherein the obtaining unit is further configured to obtain a rotational speed of the first motor; and
the apparatus further comprises:
a determining unit, configured to: determine, based on the rotational speed of the first motor and the wheel speeds of the two wheels on the first drive shaft, whether the wheel speeds are accurate; and when the wheel speeds of the two wheels on the first drive shaft are accurate, determine the slip rates of the two wheels on the first drive shaft based on the wheel speeds of the two wheels on the first drive shaft and the rotational speed of the first motor.

17. The apparatus according to any one of claims 10 to 16, wherein the apparatus comprises a vehicle control unit, or the apparatus comprises a motor controller.

18. The apparatus according to any one of claims 10 to 17, wherein the obtaining unit is further configured to: obtain a correspondence between motor output torque and a threshold, wherein the motor output torque is negatively correlated with the threshold; and obtain, from the correspondence between motor output torque and a threshold, the first safety threshold corresponding to the output torque of the first motor before dynamic control.

19. A vehicle, wherein the vehicle comprises the vehicle control apparatus according to any one of claims 10 to 18 and a motor, and the vehicle control apparatus is connected to the motor.

20. A vehicle control device, wherein the vehicle control device comprises a processor and a memory, the memory is configured to store a software program, and the processor runs or executes the software program stored in the memory, to enable the vehicle control device to implement the method according to any one of claims 1 to 9.

21. A computer-readable storage medium, wherein the computer-readable storage medium is configured to store program code to be executed by a processor, and the program code comprises instructions used to implement the method according to any one of claims 1 to 9.

22. A computer program, wherein the computer program comprises computer program code, and when the computer program code is run by a computer, the computer is enabled to execute instructions for the method according to any one of claims 1 to 9.
